Europäisches Patentamt

European Patent Office

Office européen des brevets

(11) Publication number: **0 240 641**

**A2**

# EUROPEAN PATENT APPLICATION

(21) Application number: **86310231.5**

(22) Date of filing: **31.12.86**

(51) Int. Cl.⁴: **A01G 27/00**

(30) Priority: **12.03.86 GB 8606080**

(43) Date of publication of application:
**14.10.87 Bulletin 87/42**

(84) Designated Contracting States:
**GB NL**

(71) Applicant: **Fong, Hanry**
**3rd Floor, Flat 12 82 Fu Yan Street**
**Kwun Tong Kowloon(HK)**

(72) Inventor: **Fong, Hanry**
**3rd Floor, Flat 12 82 Fu Yan Street**
**Kwun Tong Kowloon(HK)**

(74) Representative: **Jackson, Peter Arthur et al**
**GILL JENNINGS & EVERY 53-64 Chancery**
**Lane**
**London WC2A 1HN(GB)**

(54) **Plant container.**

(57) A plant container comprises an inner wall (1) providing a pot for a plant (24) and an outer wall (2), between which is provided a water reservoir (8). The reservoir replenishes water in a dish (3) through an opening (19), and as water is sucked out of the dish by the plant, the opening (19) and a vent pipe (22) are uncovered to release a vacuum in the reservoir and allow replenishment of the dish from the reservoir until the outlet and vent pipe are reclosed by the water in the dish.

Fig. 2.

# PLANT CONTAINER

It is commonplace for plant pots containing growing plants, to have an aperture in their bottom, and to be stood in a dish of water, so that the water may be drawn through the aperture into the soil within the pot for nourishing the plant. However, the level of water must not be too high around the bottom of the pot, otherwise the water will rise to the same level within the pot and the soil within the pot will become undesirably saturated. It is consequently necessary continually to monitor the level of water in the dish and repeatedly to replenish the dish with small quantities of water as the water is used up by being drawing into the pot or by evaporation.

My GB-A-2161357 discloses a plant container comprising an inner wall providing a pot, which is arranged to contain a plant in a growing medium and which has a water inlet aperture adjacent to its bottom; an outer wall, which surrounds the inner wall to provide between the walls a water reservoir; a dish which is located beneath the walls and which is capable of containing water up to a level above that of the aperture in the pot; the reservoir being provided adjacent to its top with a filling opening, which is provided with a removable air-tight closure, and adjacent to its bottom with an outlet which opens into the dish at the level at which water can be contained in the dish but above the level of the aperture in the pot. Such a container is hereinafter referred to as of the kind described.

With this kind of container, when the reservoir is filled with water and the top of the reservoir sealed by the closure, water flows through the outlet from the reservoir into the dish until the level of water in the dish seals the outlet, shortly whereafter the flow of water ceases owing to a vacuum being created in the top of the reservoir, sufficient to support the head of water in the reservoir. As water in the dish is used up by being drawn through the aperture in the pot into the growing medium, the water level in the dish falls below the outlet and air is free to pass up through the outlet to release the vacuum in the reservoir and allow further water to flow through the outlet until the outlet is resealed and the necessary vacuum is reformed in the top of the reservoir. A level of water in the dish is thus automatically maintained just above the aperture at the bottom of the pot. However, the outflow of water from the reservoir down into the dish is through the same outlet as that through which air passes up into the reservoir and this leads to an undesirable glugging action.

According to the present invention, a container of the kind described is provided additionally with a vent duct, a lower end of which opens through the bottom of the reservoir into the dish at a level not below that at which the outlet opens into the dish, the other upper end of the duct opening into the top of the reservoir.

With this modification, the vacuum in the reservoir is released, as soon as the plant has absorbed water from the dish and/or there has been sufficient evaporation for the water level in the dish to be lowered and the lower end of the duct unsealed, whereby water can flow freely through the outlet from the reservoir to replenish the dish. The flow continues until the lower end of the duct is resealed and a vacuum has reformed in the upper part of the reservoir, in which case no water will leak or flow from the outlet from the reservoir unless and until the water level of the dish has again fallen.

The duct is most simply a pipe, the lower end of which is sealed to a hole in the bottom of the reservoir, and the upper end of which opens freely into the upper end of the reservoir.

An example of a plant container constructed in accordance with the present invention is illustrated in the accompanying drawings, in which:-

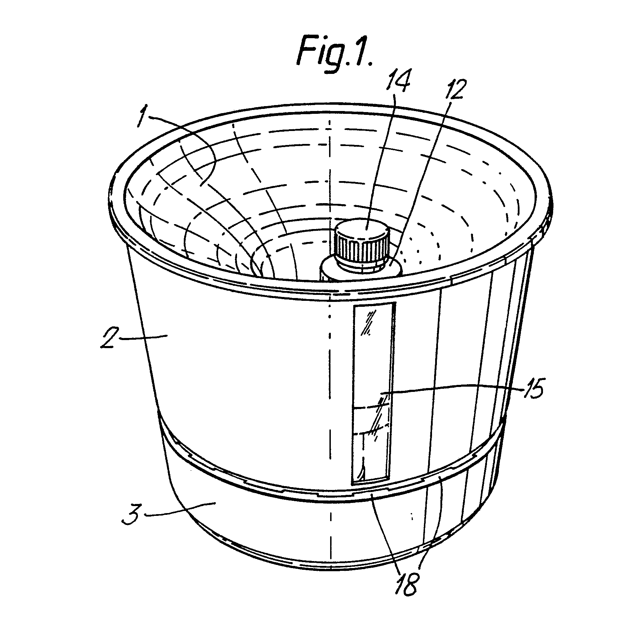

Figure 1 is a perspective view; and,

Figure 2 is a central vertical section through the container.

The main component parts of the container are all moulded from rigid plastics material and consist of an annular, upwardly flared, inner wall component 1, an annular outer wall component 2 and a dish 3. The components 1 and 2 are fused together at upper and lower positions where an annular bead 4 on the outer wall 2 nests within an annular groove formed by an annular flange 5 on the inner wall 1, and where an annular flange 6 at the bottom of the outer wall 2 nests with complementary parts 7 at the bottom of the inner wall 1. This provides a reservoir space 8 between the two walls.

The interior of the inner wall 1 is also partially closed at the bottom by a cross web 9 provided with a number of apertures 10. In addition, the inner wall 1 is provided around an opening 11 with an integral boss 12 terminating in an externally screw threaded neck 13, which is arranged to receive a closure cap 14 for sealing the neck 13 and hence the opening 11 in an air-tight manner.

One side of the outer wall 1 has a vertical translucent strip 15, which forms a window enabling the level of water in the reservoir to be seen from the outside, so that it is apparent when replenishment of the reservoir through the neck 13 is necessary.

The subassembly of walls 1 and 2 rests in the dish 3 with a radially inwardly stepped lower portion 16 of the outer wall 2 resting in and against an upwardly flared inner surface of a peripheral wall 17 of the dish. At the point of contact between the portion 16 and wall 17, the portion 16 is provided with vertical ribs 18 so that the interior of the dish is open to atmospheric pressure.

A narrow outlet 19, about 1 mm in diameter is formed through a bottom wall portion 20 of the outer wall 2, for water to flow from the reservoir 8 into the dish 3. A vent pipe 21 is sealed at its bottom end in a hole 22 in the wall portion 20 and extends up within the reservoir 8 where its upper end 23 is open. The hole 22 and outlet 19 are substantially at the same level, above the level of the apertures 10.

The reservoir is initially filled with water through the neck 13. During the refilling water is free to flow through the outlet 19 into the dish 3, but the outlet is so small that the reservoir can readily be filled before the dish overflows. The cap 14 is then screwed onto the neck 13 to seal the reservoir, except for the outlet 19 and hole 22. Water continues to flow through the outlet 19 until the level of water in the dish seals the outlet 19 and the hole 22 and sufficient vacuum has built up in the top of the reservoir to support the head of water in the reservoir. As water is used up, either by evaporation, or by being drawn up through the apertures 10 into the pot, the water level will drop below the opening 22, whereupon air above the water in the dish will pass through the vent pipe 21 and release the vacuum, allowing automatically limited relenishment of the dish through the outlet 19 until the outlet and hole 22 are resealed and the vacuum reforms in the reservoir, i.e. no water will then leak or flow from outlet 19 of the reservoir.

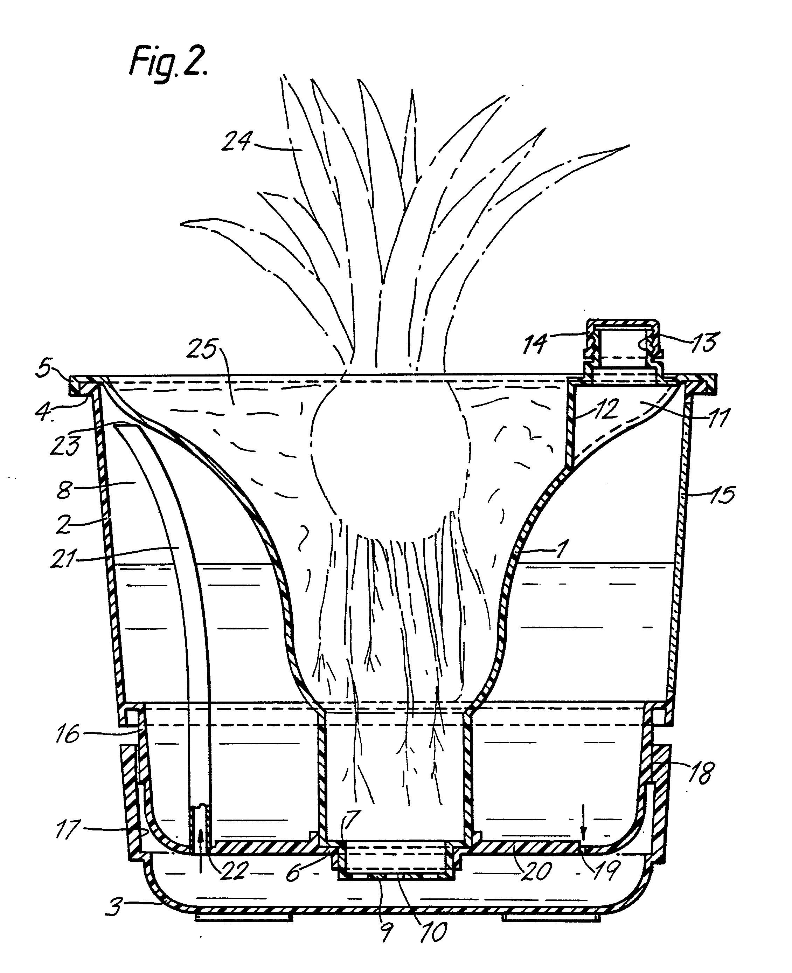

Figure 2 illustrates diagrammatically a plant 24 growing in medium 25.

The outlet 19 could be provided with a valve, such as the rotary valve disclosed in GB-A-2161357, to close the outlet 19 during refilling of the reservoir. However, this sophistication is probably unnecessary.

## Claims

1. A plant container comprising an inner wall (1) providing a pot, which is arranged to contain a plant (24) in a growing medium (25) and which has a water inlet aperture (10) adjacent to its bottom; and outer wall (2), which surrounds the inner wall to provide between the walls a water reservoir (8); a dish (3) which is located beneath the walls (1,2) and which is capable of containing water up to a level above that of the aperture in the pot; the reservoir being provided adjacent to its top with a filling opening (11), which is provided with a removable air-tight closure (14), and adjacent to its bottom with an outlet (19) which opens into the dish at the level at which water can be contained in the dish but above the level of the aperture (10) in the pot; characterised by a vent duct (21), a lower end (22) of which opens through the bottom of the reservoir (8) into the dish (3) at a level not below that at which the outlet (19) opens into the dish, the other upper end (23) of the duct opening into the top of the reservoir.

2. A container according to claim 1, wherein the duct is a pipe (21), the lower end (22) of which is sealed to a hole in the bottom of the reservoir, and the upper end (23) of which opens freely into the upper end of the reservoir (8).

## Fig.1.

Fig.2.

0 240 641